# EUROPEAN PATENT SPECIFICATION

(11) **EP 3 982 064 B1**
(45) Date of publication and mention of the grant of the patent: **06.08.2025**
(21) Application number: 20817854.1
(22) Date of filing: 05.06.2020
(51) Int. Cl.: G06Q 10/20, F25B 49/00

(54) **EQUIPMENT MAINTENANCE SYSTEM**
AUSRÜSTUNGSWARTUNGSSYSTEM
SYSTÈME DE MAINTENANCE D'ÉQUIPEMENT

(30) Priority: 07.06.2019 JP 2019106608
(43) Date of publication of application: 13.04.2022
(73) Proprietor: DAIKIN INDUSTRIES, LTD., Osaka-Shi, Osaka 530-0001 (JP)
(72) Inventor: YOSHIKAWA Satoshi, Osaka-shi, Osaka 530-8323 (JP)
(74) Representative: Hoffmann Eitle
(86) International application number: PCT/JP2020/022397
(87) International publication number: WO 2020/246601

(56) References cited:
- WO-A1-2017/099229
- WO-A1-2018/042940
- JP-A- 2012 027 759
- US-A1- 2011 231 581
- US-A1- 2018 365 659

## Description

### TECHNICAL FIELD

The present disclosure relates to a device management system that manages devices.

### BACKGROUND ART

Patent Document 1 discloses a technology related to a device management system that checks devices. In the publication, the device management system (information processing device in the publication) is connected to an information terminal of a user and an information terminal of a store where a refrigeration device can be checked. The device management system generates routine check information based on driving status information that is associated with the refrigeration device and transmits the routine check information to the information terminal of the user and the information terminal of the store.

Patent Document 2 describes a device management apparatus is connected to a plurality of devices (printers) via a network. The device management apparatus is arranged to have a device management function that, when an exception request for excepting a device from the management objects is received, a trap setting of the device is set to an OFF state and the device information of the device is excepted or deleted from the device management information of the management object devices currently stored in a predetermined storage area of the storage device.

Patent Document 3 describes an information processing apparatus for inspecting refrigeration apparatuses. The apparatus stores a time management table where a refrigeration apparatus is registered in association with the cycle of the regular inspection.

### PRIOR ART LITERATURE

### Patent Document

Patent Document 1:JP 2017-107466 A
Patent Document 2: US 2011/231581 A1
Patent Document 3: US 2018/365659 A1

### SUMMARY OF THE INVENTION

### Problem that the Invention is to Solve

When the device management system manages a number of devices, a manager may not be able to easily locate the device that is subject to checking. Accordingly, a device management system that allows a checked subject to be easily located will be described hereafter. Means for Solving the Problem

The present invention relates to a device management system according to claim 1. This configuration allows the facility devices to be specified more easily as the checked subject than when examining the check history of each facility device to determine whether the facility device is subject to the next check.

In the device management system, the device information storing unit may be separate from the condition information storing unit. With this configuration, compared to when storing the information managed by the device information storing unit together with the information managed by the condition information storing unit in the same memory, the total capacity of the two memories managing information (i.e., device information storing unit and condition information storing unit) can be decreased.

In the device management system, the device list generating unit may update the specifying condition based on change information related to the specifying condition that is obtained via an interface. This configuration allows the specifying condition in the device management system to be updated when there is a need to change the specifying condition. Thus, the checked subject can easily be specified based on the changed content of the specifying condition.

In the device management system, the device information includes information related to a product classification of each of the facility devices. The specifying condition includes the product classification as information for specifying the facility devices and a check frequency that is set in accordance with the product classification as information for specifying a check period of each of the facility devices. The device list generating unit specifies the subject device that is a checked subject in a specific period from the facility devices based on the product classification and the check frequency set in accordance with the product classification. This configuration can easily specify the checked subject device for a specific period when the check frequency is set in accordance with the product classification.

In the device management system, the device list generating unit may specify the subject device that is a next checked subject based on an elapsed period from when each of the facility devices was last checked and the check frequency corresponding to the product classification. This configuration can easily specify the subject device of the next check.

In the device management system, the device information may include information related to a rated output of a compressor installed in each of the facility devices. The specifying condition includes the rated output of the compressor as information for specifying the facility devices and a check frequency that is set in accordance with the rated output of the compressor as information for specifying a check period of each of the facility devices. The device list generating unit specifies the subject device that is a checked subject in a specific period from the facility devices based on the rated output of the compressor of each of the facility devices and the check frequency set in accordance with the rated output of the compressor. This configuration can easily specify the checked subject device in a specific period when the check frequency is set in accordance with the rated output of the compressor.

In the device management system, the facility devices may include a refrigerating and air-conditioning device. The device list generating unit specifies the subject device that is a next checked subject based on an elapsed period from when the refrigerating and air-conditioning device was last checked and the check frequency corresponding to the rated output of the compressor. This configuration allows the subject device of the next check to be easily specified.

In the device management system, the device list generating unit may compare the device information stored in the device information storing unit and the specifying condition stored in the condition information storing unit to issue a notification of the subject device specified as the checked subject and a check content of the subject device. This configuration allows a terminal to receive the notification and obtain the check content of the checked subject device without accessing the device management system for the checked subject device.

### BRIEF DESCRIPTION OF THE DRAWINGS

Fig. 1 is a schematic diagram of a device management system.
Fig. 2 is a diagram of a device information list in accordance with a first embodiment.
Fig. 3 is a diagram of a check regulation in accordance with the first embodiment.
Fig. 4 is a flowchart illustrating a checked subject specifying process in accordance with the first embodiment.
Fig. 5 is a diagram of a device list including a subject device in accordance with the first embodiment.
Fig. 6 is a schematic diagram of an operation screen for updating a specifying condition in accordance with the first embodiment.
Fig. 7 is a diagram of a device information list in accordance with a second embodiment.
Fig. 8 is a diagram of a check regulation in accordance with the second embodiment.
Fig. 9 is a flowchart illustrating a checked subject specifying process in accordance with the second embodiment.
Fig. 10 is a diagram of a device list including a subject device in accordance with the second embodiment.
Fig. 11 is a flowchart illustrating a checked subject specifying process in accordance with another embodiment.
Fig. 12 is a diagram indicating, on a time axis, the relationship of when previous checks were performed and when a checked subject specifying process was performed in accordance with the other embodiment.

### MODES FOR CARRYING OUT THE INVENTION

### First Embodiment

A device management system 1 according to the present embodiment will now be described.

The device management system 1 manages facility devices 2 and locates a checked subject from the facility devices 2.

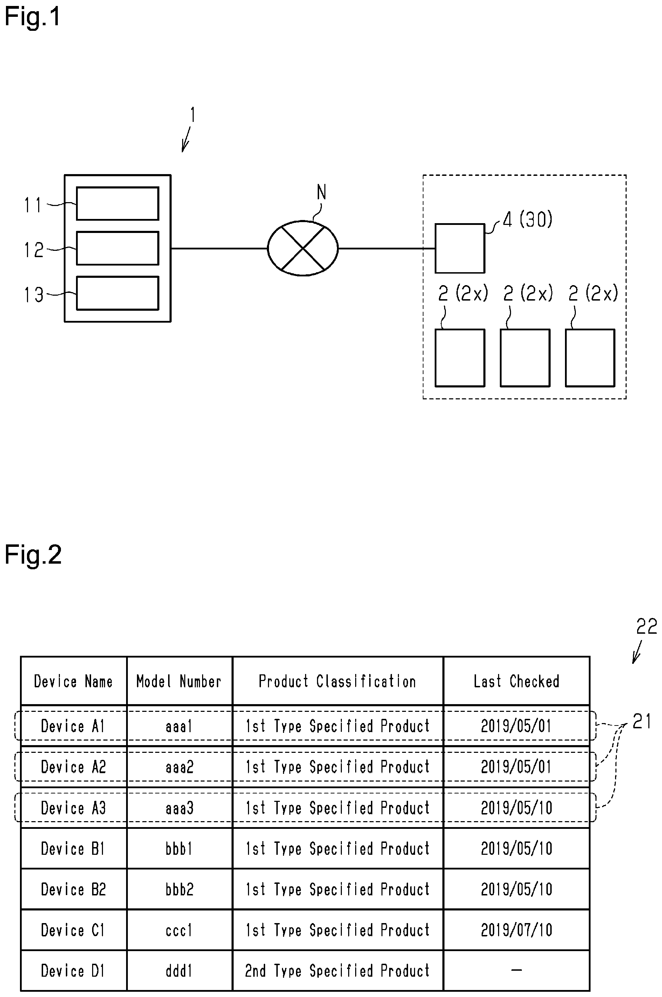

As shown in Fig. 1, in an example, the device management system 1 is connected to a network N. Examples of the network N include the internet, a local network, a dedicated line network, a telephone communication network, and a network constructed from two or more of the above networks. The device management system 1 manages the facility devices 2 that are installed in a building 3 or a transport vehicle. The device management system 1 is connectable to a terminal 4 of a manager of the building 3 or the transport vehicle. The building 3 is, for example, a building structure, a store, a factory, a school, a facility, a venue, a hotel, an inn, a convenience store, a supermarket, a restaurant, or an underground shopping mall corridor. The transport vehicle is, for example, a bus, a train, an aircraft, a ship, a rocket, or an elevator. The device management system 1 may manage the facility devices 2 installed in a number of buildings 3. In this case, preferably, the device management system 1 groups the facility devices 2 in accordance with buildings 3 for management. Alternatively, the device management system 1 may manage the facility devices 2 such that the facility devices 2 can be specified based on the managers.

The device management system 1 does not have to be connected to the network N. The device management system 1 manages the facility devices 2 based on information input to the device management system 1. The device management system 1 receives information via an input terminal of the device management system 1.

There is no limit to the facility device 2 that is managed by the device management system 1. The facility device 2 includes a refrigerating and air-conditioning device 2x that uses a refrigerant. The refrigerating and air-conditioning device 2x includes an air conditioner, an air conditioner installed in a train, a centrifugal chiller, a screw refrigeration compressor, a refrigerator, a water cooler, an ice making machine, a beer server, a freezer, a freezer showcase, a transport freezer unit, a transport refrigeration unit, a gas heat pump air-conditioner, and a vending machine with refrigeration function.

There is no limit to the contents of a check. When the managed facility device 2 is the refrigerating and air-conditioning device 2x, the check contents are refrigerant leakage and events that may cause refrigerant leakage. Examples of events that may cause refrigerant leakage include abnormal sounds of the device, rust, damage, dents, or oil smears on the device. The refrigerating and air-conditioning device 2x may be checked for malfunction or wear of the parts.

A substance having a significant greenhouse effect is often used as the refrigerant of the refrigerating and air-conditioning device 2x. Thus, it is desirable that refrigerant leakage of the refrigerating and air-conditioning device 2x be managed. In some countries, the refrigerating and air-conditioning device 2x must undergo mandatory checking for refrigerant leakage. Further, it is desirable that the refrigerating and air-conditioning device 2x be periodically checked for refrigerant leakage regardless of whether the check is mandated by law. Accordingly, the present embodiment describes the device management system 1 of which the managed subject is the refrigerating and air-conditioning device 2x.

As shown in Fig. 1, the device management system 1 includes a device information storing unit 11, a condition information storing unit 12, and a device list generating unit 13.

The device information storing unit 11 stores device information 21 related to the facility devices 2. The device information storing unit 11 is formed by, for example, a semiconductor memory, a DVD, a DVD-R, a CD, a CD-R, or hard disk.

As shown in Fig. 2, the device information storing unit 11 stores the device information 21 for each facility device 2. Preferably, the device information storing unit 11 holds a device information list 22. The device information list 22 includes the device information 21 of each facility device 2.

The device information 21 includes information related to a product classification of the facility device 2. In an example, the product classification of the facility device 2 is defined by law. In the present embodiment, the product classification of the facility device 2 includes a first type specified product and a second type specified product. The first type specified product includes the refrigerating and air-conditioning device 2x that is used for commercial purposes and does not include an air conditioner installed in an automobile, or an automobile air conditioner. The second type specified product is an air conditioner installed in an automobile, or an automobile air conditioner. The product classifications of the facility device 2 do not have to be defined by the law. For example, the product classification of the facility device 2 may include commercial purpose product and household purpose product. The product classification of the facility device 2 may include a non-specified product that is not a checked subject in addition to the first type specified product and the second type specified product that are checked subjects.

The device information 21 includes the time of when the facility device 2 was last checked. The last check refers to the check that was performed most recently. The device information 21 includes a device name and a model number. The model number is a number unique to the facility device 2. The model number is a number identifying the facility device 2. The model number may be a serial number assigned to each facility device 2. Preferably, the device information 21 includes installation location information of the facility device 2.

The device information 21 is generated corresponding to the facility device 2. When a facility device 2 is additionally installed, new device information 21 is generated. When the facility device 2 is updated, the content of the device information 21 is updated and the check history (e.g., when check was performed) is reset. When the facility device 2 is removed from the list of managed subjects, the device information 21 of the removed facility device 2 will remain in the storage without being eliminated.

Specifically, it is preferred that the device information 21 include update information, which indicates that the facility device 2 has been updated, and device addition/removal information. The facility device 2 is updated, for example, when the facility device 2 is replaced or when the facility device 2 is renewed through repair. The update information includes information that indicates whether the facility device 2 has been updated as well as the year, month, date, and time of the update. Preferably, the update information includes change history of the product classification.

The device addition/removal information indicates any of whether the facility device 2 has been additionally installed, whether the facility device 2 has been removed from the managed subjects, and whether the facility device 2 has been a managed subject from the beginning. The device addition/removal information indicates that the facility device 2 has been managed from the beginning in a case where, for example, the facility device 2 has been managed by the device management system 1 from when the system was first constructed. If the facility device 2 was additionally installed, the device addition/removal information indicates that the facility device 2 has been additionally installed. In an example, the device addition/removal information indicates that the facility device 2 was additionally installed and the year, month, date, and time of when the facility device 2 was additionally installed. If the facility device 2 has been removed thereby decreasing the number of the facility devices 2 managed by the device management system 1, the device addition/removal information indicates that the facility device 2 was excluded and the year, month, date, and time of when the device was removed. Even after removal of the facility device 2 from the managed subjects, the device management system 1 manages the device information 21 of the removed facility device 2.

The condition information storing unit 12 stores a specifying condition for specifying checked subjects from the facility devices 2. In an example, the condition information storing unit 12 holds a condition list including the specifying condition. The condition information storing unit 12 is formed by, for example, a semiconductor memory, an optical disc, or a magnetic disk. The condition information storing unit 12 and the device information storing unit 11 may be formed by the same storage medium.

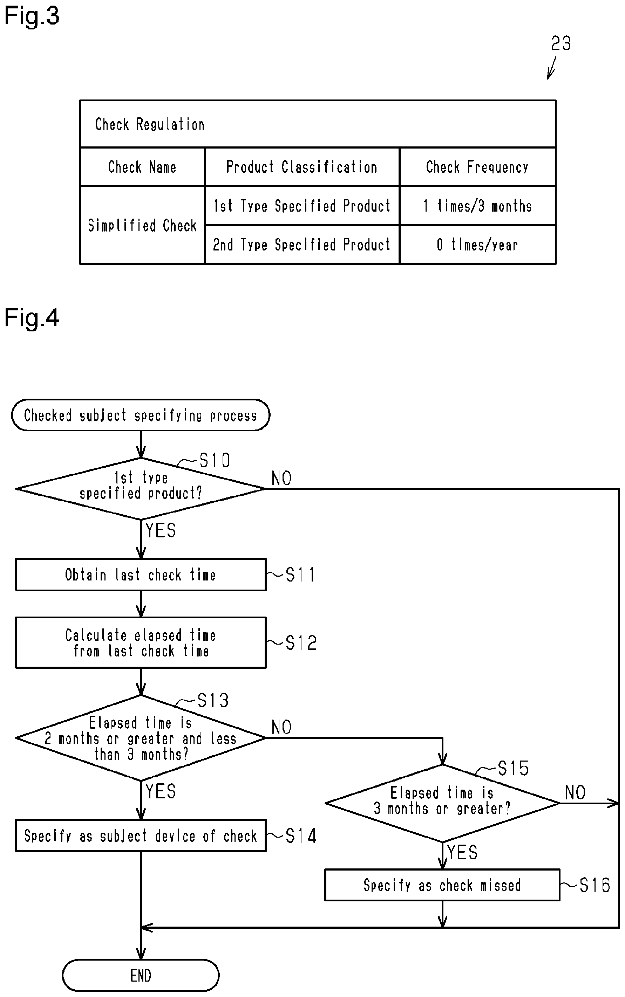

Fig. 3 shows an example of a check regulation 23. In an example, the check regulation 23 is designated by a nation, a local public entity, or a private entity. The check regulation 23 is a regulation of a nation, a local public entity, or a private entity that mandates or recommends checking of the facility device 2. In the example shown in Fig. 3, the check regulation 23 regulates that a facility device 2 classified as the first type specified product should be checked at least once every three months. Further, the check regulation 23 regulates that the second type specified product should be checked zero times every year. In other words, the second type specified product is not a checked subject. In this manner, the check regulation 23 shown in Fig. 3 defines the checked subject and the check frequency for each product classification.

The specifying condition is a condition that specifies the facility devices 2 so that the facility devices 2 comply with the check regulation 23 in the future. The specifying condition includes the product classification as information for specifying a facility device 2 and the check frequency that is set in accordance with the product classification as information specifying the check period of the facility device 2. Here, "check frequency" in the specifying condition is a concept including a period limit condition that limits the period from one check to the next check. The product classification included in the specifying condition is the same as the product classification included in the device information 21. In the present embodiment, the specifying condition first specifies that the product classification of the facility device 2 is the first type specified device and then specifies that the period limit condition is two months or greater and less than three months from one check to the next check.

The device list generating unit 13 can be circuitry including 1) one or more processors that run on a computer program (software) to execute various processes; 2) one or more exclusive hardware circuits such as an application specific integrated circuit (ASIC) that execute at least part of various processes, or 3) a combination of the above. A processor includes a computer processing unit (CPU) and a memory, such as a random-access memory (RAM) or a read-only memory (ROM). The memory stores program codes or commands that are configured to have the CPU execute processes. The memory, which is a computer readable medium, may be any available medium that is accessible by a versatile or dedicated computer. The device list generating unit 13 generates a device list 24 including the subject devices that are the checked subjects. The device list generating unit 13 compares the device information 21 stored in the device information storing unit 11 and the specifying condition stored in the condition information storing unit 12 to specify subject devices that are the checked subject from the facility devices 2, which are the managed subjects. The device list generating unit 13 forms the device list 24 including the subject devices that are the checked subjects.

The device list generating unit 13 specifies the subject devices that are the checked subject during a specific period from the facility devices 2 based on the product classification and the check frequency set in accordance with the product classification. Specifically, the device list generating unit 13 specifies the subject devices of the next check based on the elapsed period from when the facility devices 2 was last checked and the check frequency corresponding to the product classification.

Specifically, the device list generating unit 13 specifies the subject devices by performing "checked subject specifying process," which will be described below. The device list generating unit 13 performs the checked subject specifying process on each facility device 2, which is the managed subject of the device management system 1, based on an instruction from an operator who is using the device management system 1.

The checked subject specifying process will now be described with reference to Fig. 4.

The device list generating unit 13 performs the checked subject specifying process sequentially on the facility devices 2 stored in the device information storing unit 11.

In step S10, the device list generating unit 13 determines whether the product classification of the facility device 2, which is the determination subject, is the first type specified product. When the product classification of the facility device 2 is the first type specified product, the device list generating unit 13 performs step S11. When the product classification of the facility device 2 is not the first type specified product, the device list generating unit 13 does not specify the facility device 2 that is subject to determination as the checked subject device.

In step S11, the device list generating unit 13 obtains information of when the facility device 2 was last checked from the device information 21 of the facility device 2.

In step S12, the device list generating unit 13 calculates the elapsed time from when the last check was performed to the checked subject specifying process.

In step S13, the device list generating unit 13 determines whether the elapsed time calculated in step S12 is greater than or equal to two months and less than three months. When the elapsed time is greater than or equal to two months and less than three months, the device list generating unit 13 performs step S14. When the elapsed time is not greater than or equal to two months and less than three months, the device list generating unit 13 performs step S15. In step S15, the device list generating unit 13 determines whether the elapsed time calculated in step S12 is greater than three months. When the elapsed time is greater than or equal to three months, the device list generating unit 13 determines in step S16 that the facility device 2 has missed the preceding check. Further, preferably, the device list generating unit 13 notifies and alerts the terminal 4 of the user that the facility device 2 has missed the preceding check. When the elapsed time is not greater than or equal to three months in step S15, the device list generating unit 13 specifies that the facility device 2 is not a checked subject device.

In step S14, the device list generating unit 13 specifies the facility device 2 as a checked subject device. After performing the checked subject specifying process, the device list generating unit 13 generates the device list 24 indicating the checked subjects based on the result of the checked subject specifying process.

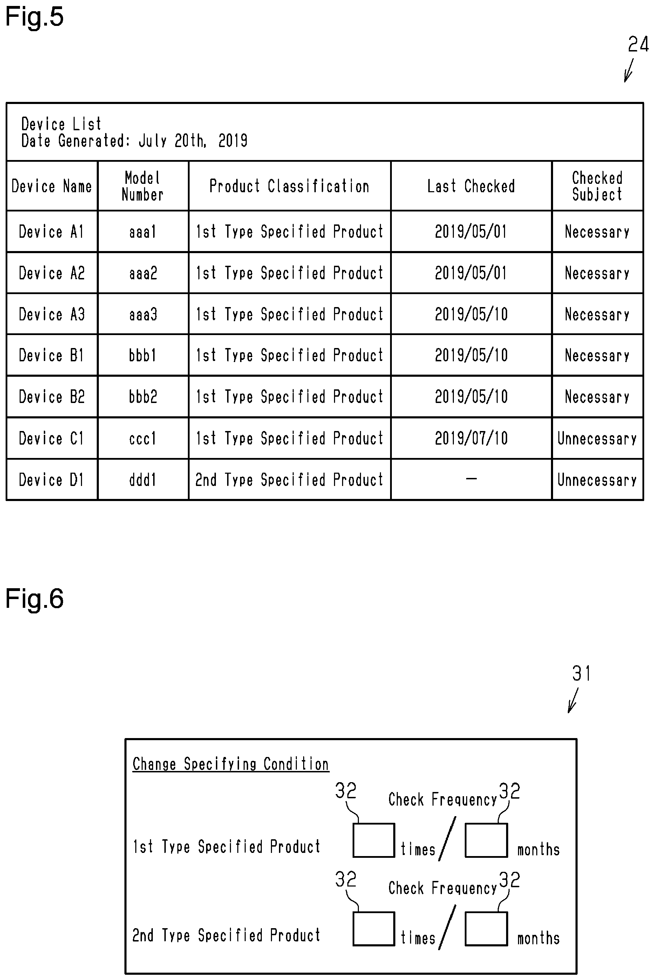

An example of the device list 24 indicating the checked subject devices will now be described with reference to Fig. 5.

The device list 24 shows the date when the device list 24 was generated as a specific period specifying a checked subject. The generation date of the device list 24 is the same as the date when the checked subject specifying process was performed.

The device list 24 includes information of the facility devices 2 such as model names, model numbers, product classifications, when the facility device 2 was last checked, and whether the next check is necessary. When a facility device 2 is specified as a checked subject, checking is "Necessary". When the facility device 2 is not specified as a checked subject, checking is "Unnecessary".

In Fig. 5, devices A1, A2, A3, B1, and B2 are specified as the checked subjects because these facility devices 2 are the first type specified products and the elapsed period from the last check to the checked subject specifying process is greater than or equal to two months and less than three months. Device C1 is not specified as a checked subject because the elapsed period from the last check to the checked subject specifying process is less than one month. Device D1 is not specified as a checked subject because device D1 is the second type specified product.

Changing of the specifying condition of the checked subject device will now be described with reference to Fig. 6.

The specifying condition of checked subject devices may be changed because of improvements in the capabilities of the facility devices 2, reevaluations on the greenhouse effect of the refrigerant, the degree of global warming, and the public sentiment on global warming. Thus, preferably, the device management system 1 allows for easy changing of the specifying condition of the checked subject device. Accordingly, the device list generating unit 13 may be configured to update the specifying condition based on change information related to the specifying condition that is obtained via an interface 30. The change information is related to the check regulation 23.

Fig. 6 shows an example of an operation screen 31 of the interface 30. The interface 30 is configured as an input terminal connected to the device management system 1. The operation screen 31 includes an input portion 32 for specifying the check frequency. The input portion 32 is configured such that the change information related to the specifying condition is input to the input portion 32. For example, when the check frequency of the first type specified product is changed from once every three months to once every two months, "2" for two months is input to the input portion 32 as the change information. The device list generating unit 13 updates the specifying condition based on the change information input to the input portion 32. In the present example, the device list generating unit 13 updates the period limit condition of the specifying condition from "elapsed time from last check greater than or equal to two months and less than three months" to "elapsed time from last check greater than or equal to one month and less than two months".

The change information may include change information related to the product classification of the facility device 2 in addition to the change information related to the check frequency. The product classification of the facility device 2 may be changed by an administrative entity. Thus, it is preferred that the change information include the change information related to the product classification of the facility device 2. The change information related to the product classification of the facility device 2 will be changed in the same manner as the check frequency. When the product classification of the facility device 2 is changed, the device list generating unit 13 changes the check regulation 23 (e.g., checked subject or check frequency) of the facility device 2 in correspondence with the change in the product classification. In another example, when the facility device 2 is no longer the checked subject, the change information is changed from first type specified product or second type specified product to non-specified product indicating that the facility device 2 is not a checked subject. In this manner, a specific facility device 2 can easily be removed from the device list 24 when the change information is changed.

The operation of the present embodiment will now be described.

The device list generating unit 13 compares the device information 21 stored in the device information storing unit 11 and the specifying condition stored in the condition information storing unit 12 to specify the subject devices that are the checked subjects. In this manner, the device management system 1 specifies the checked subject device from the facility devices 2. This allows the user of the device management system 1 to easily recognize the checked subject devices.

The present embodiment has the following advantages.
(1) The device list generating unit 13 compares the device information 21 and the specifying condition stored in the condition information storing unit 12 to specify the checked subject devices. This configuration allows the facility devices 2 to be specified more easily as the checked subjects than when examining the check history of each facility device 2 to determine whether the facility device 2 is subject to the next check. Further, with this configuration, the subject devices can be determined more accurately than when a technician specifies each checked subject device.
(2) The device information storing unit 11 is separate from the condition information storing unit 12.

With this configuration, compared to when storing the information managed by the device information storing unit 11 together with the information managed by the condition information storing unit 12 in the same memory, the total storage capacity of the two memories managing information (i.e., device information storing unit 11 and condition information storing unit 12) can be decreased.

To specify checked subjects from the facility devices 2, for example, a cohesive database may be formed combining the device information 21, which is managed by the device information storing unit 11, and the condition list, which is managed by the condition information storing unit 12. Specifically, the device information 21 of each facility device 2 is associated with the specifying condition in the condition list. In this case, the information amount of the device information 21 of the facility devices 2 is increased by the information amount (hereafter, added information amount) of the specifying condition for each facility device 2 in the condition list. Each added information corresponds to the information amount of one line shown in Fig. 2. The specifying condition in the condition list does not have to be associated with each facility device 2 and, instead, is associated with the product classification (alternatively, product classification and compressor rated output) of the facility device 2. Thus, the specifying condition in the condition list can be managed independently from the device information 21 of the facility devices 2. Further, the specifying condition in the condition list is a rule defined in accordance with the product classification (alternatively, product classification and compressor rated output) of the facility device 2. Thus, the number of the conditions is small and the information amount of the specifying condition in the condition list is smaller than the added information amount. The specifying condition in the condition list corresponds to the information amount of the check regulation shown in Fig. 3. Therefore, the total information amount of the device information 21 and the condition list can be smaller than that of the above-described cohesive database. Also, in the above configuration, the device information storing unit 11 that stores the device information 21 is separate from the condition information storing unit 12 that stores the condition list. Accordingly, the storage capacity of the device information storing unit 11 and the condition information storing unit 12 can be smaller than the storage capacity of a memory that stores the above-described cohesive information.

(3) Preferably, the device list generating unit 13 updates the specifying condition based on the change information related to the specifying condition that is obtained via the interface 30. This configuration allows the specifying condition in the device management system 1 to be updated when there is a need to change the specifying condition. Thus, the checked subject can easily be specified based on the changed content of the specifying condition. Further, the device list generating unit 13 can complete an updating process by simply updating the specifying condition stored in the condition information storing unit 12 without accessing a device other than the condition information storing unit 12. This increases the speed of the updating process.

(4) The device information 21 includes the information related to the product classification of the facility device 2. The specifying condition includes the product classification as information for specifying a facility device 2 and the check frequency that is set in accordance with the product classification as information for specifying the check period of each facility device 2. The device list generating unit 13 specifies the subject device that is the checked subject for a specific period from the facility devices 2 based on the product classification and the check frequency set in accordance with the product classification. This configuration can easily specify the checked subject device for a specific period when the check frequency is set in accordance with the product classification. The specific period is when the user of the device management system 1 specifies the checked subject from the facility devices 2, and the specific period can be determined by the user.

(5) Preferably, the device information 21 includes the update information and the device addition/removal information of the device information 21. This configuration can properly specify a facility device 2 as a checked subject even when the facility device 2 is updated, added, or removed while minimizing changes in the information.

(6) The device list generating unit 13 specifies the subject device of the next check based on the elapsed period from when the facility device 2 was last checked and the check frequency corresponding to the product classification. This configuration can easily specify the subject device of the next check.

### Second Embodiment

The device management system 1 in accordance with a second embodiment will now be described with reference to Figs. 1 and 7 to 10. Same reference numerals are given to those components that are the same as the corresponding components of the first embodiment. Such components will not be described in detail.

The device management system 1 in accordance with the present embodiment manages the refrigerating and air-conditioning devices 2x as the facility devices 2 on which a number of checks are performed at different check frequencies (refer to Fig. 1). In an example, the device management system 1 manages a group of devices. The group of devices includes the refrigerating and air-conditioning devices 2x that undergo only a simplified check, the refrigerating and air-conditioning devices 2x that undergo a simplified check and a first routine check, and the refrigerating and air-conditioning device 2x that undergo a simplified check and a second routine check. In the present embodiment, each refrigerating and air-conditioning device 2x is an air conditioner.

The simplified check is a simple check related to refrigerant leakage. In the simplified check, refrigerant leakage is determined from noise, oil smears, or external damage of the refrigerating and air-conditioning device 2x. The first routine check and the second routine check are detailed checks for refrigerant leakage.

The device management system 1 includes the device information storing unit 11, the condition information storing unit 12, and the device list generating unit 13. The device information storing unit 11 stores device information 41 of each refrigerating and air-conditioning device 2x. The device information storing unit 11 holds a device information list 42. The condition information storing unit 12 stores the specifying condition for specifying checked subjects from the refrigerating and air-conditioning devices 2x. In an example, the condition information storing unit 12 holds a condition list including the specifying condition. The device list generating unit 13 generates a device list 44 including subject devices that are the checked subjects.

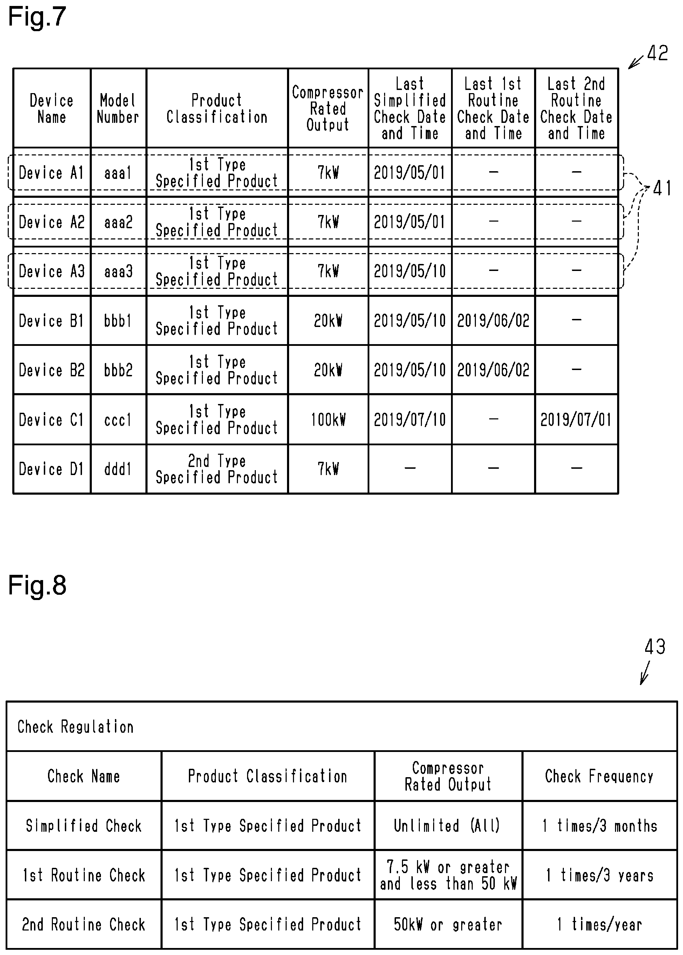

As shown in Fig. 7, the device information 41 includes information related to the product classification of each refrigerating and air-conditioning device 2x. Further, the device information 41 includes information related to the rated output of a compressor installed in the refrigerating and air-conditioning device 2x. The compressor compresses the refrigerant used in the refrigerating and air-conditioning device 2x. The amount of refrigerant in the refrigerating and air-conditioning device 2x increases in accordance with the rated output of the compressor. The device information 41 may include information related to the amount of refrigerant instead of information related to the rated output of the compressor. The device information 41 may include information related to both the rated output of the compressor and the amount of refrigerant. The device information 41 includes the date and time of the last simplified check performed on the refrigerating and air-conditioning device 2x, the date and time of the last first routine check, and the date and time of the last second routine check. Further, the device information 41 includes device names and model numbers.

Fig. 8 is an example of a check regulation 43. In the present embodiment, the check regulation 43 is set in accordance with types of the checks. The check regulation 43 regulates that the simplified check be performed at least once every three months on the refrigerating and air-conditioning device 2x that is the first type specified product. The check regulation 43 of the first routine check regulates that the check be performed at least once every three years on the refrigerating and air-conditioning device 2x that is the first type specified product and includes a compressor of which the rated output is greater than or equal to 7.5 kW and less than 50 kW. The check regulation 43 of the second routine check regulates that the check be performed once every year on the refrigerating and air-conditioning device 2x that is the first type specified product and includes a compressor of which the rated output is greater than or equal to 50 kW.

The specifying condition is a condition that specifies the refrigerating and air-conditioning devices 2x so that so that the refrigerating and air-conditioning devices 2x comply with the check regulation 43 in the future. The specifying condition includes the check frequency that is set in accordance with the rated output of the compressor. The specifying condition includes the rated output of the compressor as information for specifying the refrigerating and air-conditioning device 2x and the check frequency that is set in accordance with the rated output of the compressor as information for specifying the check period of the refrigerating and air-conditioning device 2x. Here, "check frequency" in the specifying condition is a concept including a period limit condition that limits the period from one check to the next check.

In the present embodiment, the specifying condition of the simplified check first specifies that the product classification of the refrigerating and air-conditioning device 2x is the first type specified device, and then specifies that the elapsed time from the last check is greater than or equal to two months and less than three months as the period limit condition.

The specifying condition of the first routine check first specifies that the product classification of the refrigerating and air-conditioning device 2x is the first type specified device, then specifies that the rated output of the compressor is greater than or equal to 5 kW and less than or equal to 50 kW, and also specifies that the elapsed time from the last check is greater than or equal to one year and less than three years as the period limit condition.

The specifying condition of the second routine check first specifies that the product classification of the refrigerating and air-conditioning device 2x is the first type specified device, then specifies that the rated output of the compressor is greater than or equal to 50 kW, and also specifies that the elapsed time from the last check is less than one year as the period limit condition.

The device list generating unit 13 specifies the checked subject device for a specific period from the refrigerating and air-conditioning devices 2x based on the rated output of the compressor of the refrigerating and air-conditioning device 2x and the check frequency that is set in accordance with the rated output of the compressor. Specifically, the device list generating unit 13 specifies the subject device of the next check based on the elapsed period from when the refrigerating and air-conditioning device 2x was last checked and the check frequency corresponding to the rated output of the compressor. In the present embodiment, the device list generating unit 13 includes the specifying condition of the simplified check, the specifying condition of the first routine check, and the specifying condition of the second routine check.

The device list generating unit 13 performs the checked subject specifying process described in the first embodiment for the simplified check to specify the subject device.

The device list generating unit 13 performs a "checked subject specifying process" described below for the first routine check and the second routine check to specify the subject devices. The device list generating unit 13 performs this checked subject specifying process on each refrigerating and air-conditioning device 2x that is the managed subject of the device management system 1 based on an instruction from an operator using the device management system 1.

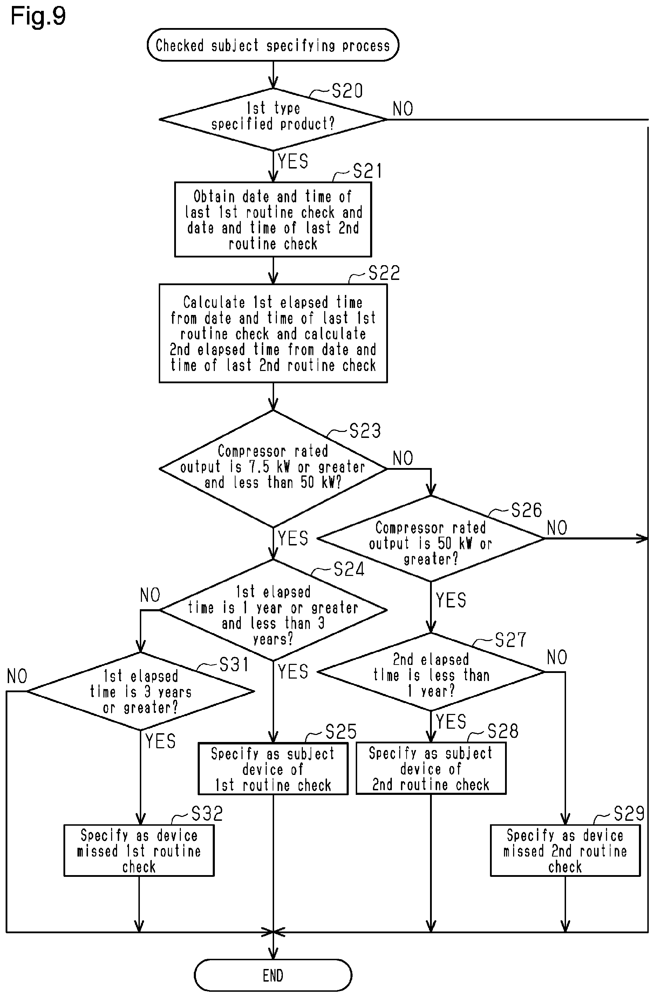

The checked subject specifying process will now be described with reference to Fig. 9.

The device list generating unit 13 performs the checked subject specifying process sequentially on the refrigerating and air-conditioning devices 2x stored in the device information storing unit 11.

In step S20, the device list generating unit 13 determines whether the product classification of the refrigerating and air-conditioning device 2x, which is the determination subject, is the first type specified product. When the product classification of the refrigerating and air-conditioning device 2x is the first type specified product, the device list generating unit 13 performs step S21. When the product classification of the refrigerating and air-conditioning device 2x is not the first type specified product, the device list generating unit 13 specifies that the refrigerating and air-conditioning device 2x is not a checked subject device.

In step S21, the device list generating unit 13 obtains the date and time of the last first routine check and the date and time of the last second routine check from the device information 41 of the refrigerating and air-conditioning device 2x.

In step S22, the device list generating unit 13 calculates a first elapsed time from the date and time of the last first routine check to the checked subject specifying process. Further, the device list generating unit 13 calculates a second elapsed time from the date and time of the last second routine check to the checked subject specifying process.

In step S23, the device list generating unit 13 determines whether the rated output of the compressor of the refrigerating and air-conditioning device 2x is greater than or equal to 7.5 kW and less than 50 kW. When the rated output of the compressor is greater than or equal to 7.5 kW and less than 50 kW, the device list generating unit 13 performs step S24. When the rated output of the compressor is not greater than or equal to 7.5 kW and less than 50 kW, the device list generating unit 13 performs step S26.

In step S24, the device list generating unit 13 determines whether the first elapsed time calculated in step S22 is greater than or equal to one year and less than three years. When the first elapsed time is greater than or equal to one year and less than three years, the device list generating unit 13 performs step S25. In step S25, the device list generating unit 13 specifies the refrigerating and air-conditioning device 2x as the subject device of the first routine check.

In step S24, when the first elapsed time is not greater than or equal to one year and less than three years, the device list generating unit 13 performs step S31. In step S31, the device list generating unit 13 determines whether the first elapsed time calculated in step S22 is greater than or equal to three years. When the elapsed time is greater than or equal to three years, the device list generating unit 13 determines in step S32 that the refrigerating and air-conditioning device 2x has missed the preceding check. Furthermore, preferably, in step S32, the device list generating unit 13 notifies and alerts the terminal 4 of the user that the refrigerating and air-conditioning device 2x has missed the preceding check. When the elapsed time is not greater than or equal to three years in step S31, the device list generating unit 13 determines that the refrigerating and air-conditioning device 2x is not the checked subject device.

In step S26, the device list generating unit 13 determines whether the rated output of the compressor of the refrigerating and air-conditioning device 2x is greater than or equal to 50 kW. When the rated output of the compressor is greater than or equal to 50 kW, the device list generating unit 13 performs step S27. When the rated output of the compressor is not greater than or equal to 50 kW, the device list generating unit 13 specifies that the refrigerating and air-conditioning device 2x is not the checked subject device.

In step S27, the device list generating unit 13 determines whether the second elapsed time calculated in step S22 is less than one year. When the second elapsed time is less than one year, the device list generating unit 13 performs step S28. In step S28, the device list generating unit 13 specifies the refrigerating and air-conditioning device 2x as the subject device of the second routine check.

When the second elapsed time is not less than one year in step S27, the device list generating unit 13 performs step S29. In step S29, the device list generating unit 13 determines that the refrigerating and air-conditioning device 2x has missed the preceding check and the check has not been performed for one year or longer. Furthermore, preferably, in step S29, the device list generating unit 13 notifies and alerts the terminal 4 of the user that the refrigerating and air-conditioning device 2x has missed the preceding check.

After performing the checked subject specifying process, the device list generating unit 13 generates the device list 44 indicating the checked subjects based on the result of the checked subject specifying process. The device list generating unit 13 outputs the device list 44 to the terminal 4 of the user.

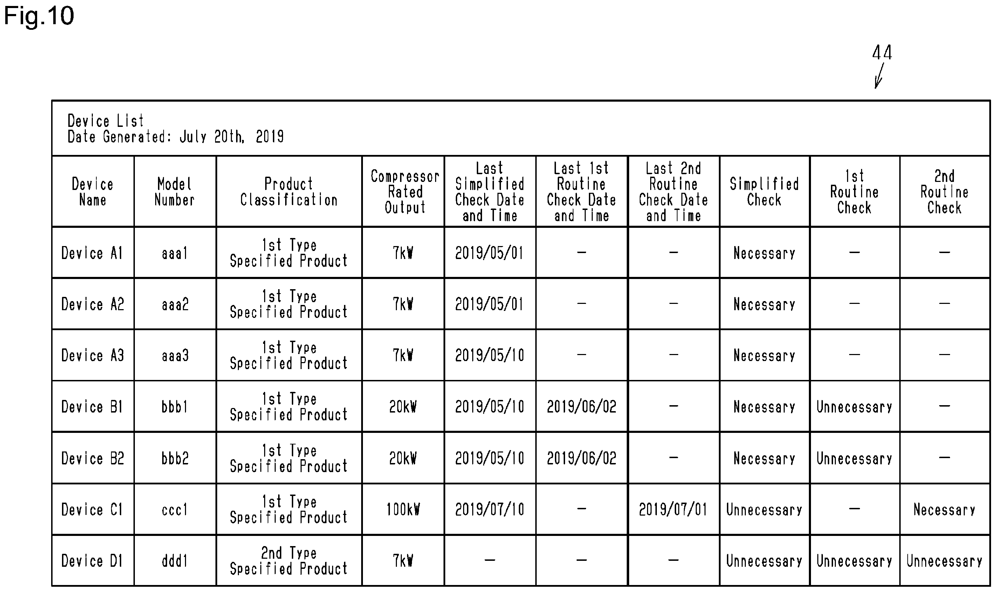

An example of the device list 44 indicating the checked subject devices will now be described with reference to Fig. 10.

The device list 44 includes the date when the device list 44 was generated as the specific period for specifying the checked subjects. The generation date of the device list 44 is the same as the date when the checked subject specifying process was performed. The device list 44 includes information of the refrigerating and air-conditioning devices 2x including model names, model numbers, product classifications, date and time of preceding simplified check, date and time of preceding first routine check, date and time of preceding second routine check, necessity of the simplified check, necessity of the first routine check, and necessity of the second routine check.

In Fig. 10, devices A1, A2, and A3 are the first type specified products and have a compressor of which the rated output is 7 kW. Accordingly, devices A1, A2, and A3 are the subject devices of the simplified check. Also, with respect to devices A1, A2, and A3, the elapsed period from the date and time of the last simplified check to the checked subject specifying process is greater than or equal to two months and less than three months. Thus, devices A1, A2, and A3 are specified as the checked subjects of the simplified check and "Necessary" is shown in the column of the simplified check in the device list 44.

Devices B1 and B2 are the first type specified products and have a compressor of which the rated output is 20 kW. Accordingly, devices B1 and B2 are the subject devices of the simplified check and the first routine check. With respect to devices B1, and B2, the elapsed period from the date and time of the last simplified check to the checked subject specifying process is greater than or equal to two months and less than three months. Thus, devices B1 and B2 are specified as the checked subjects of the simplified check and "Necessary" is shown in the column of the simplified check in the device list 44. Moreover, with respect to devices B1 and B2, the first elapsed period from the date and time of the last first routine check to the checked subject specifying process is not greater than or equal to one year and less than three years. Thus, devices B1 and B2 are not specified as the checked subjects and "Unnecessary" is shown in the column of the first routine check in the device list 44.

Device C1 is the first type specified product and has a compressor of which the rated output is 100 kW. Accordingly, device C1 is the subject device of the simplified check and the second routine check. With respect to device C1, the elapsed period from the date and time of the last simplified check to the checked subject specifying process is not greater than or equal to two months and less than three months. Thus, device C1 is not specified as the checked subject of the simplified check and "Unnecessary" is shown in the column of the simplified check in the device list 44. Furthermore, with respect to device C1, the second elapsed period from the date and time of the last second routine check to the checked subject specifying process is less than one year. Thus, device C1 is specified as the checked subject and "Necessary" is shown in the column of the second routine check in the device list 44.

The present embodiment has the following advantages.
(1) In the present embodiment, the device information 41 includes the information related to the rated output of the compressor installed in the refrigerating and air-conditioning device 2x. The specifying condition includes the rated output of the compressor as information for specifying the refrigerating and air-conditioning device 2x and the check frequency that is set in accordance with the rated output of the compressor as information for specifying the check period of the refrigerating and air-conditioning device 2x. The device list generating unit 13 specifies the checked subject device in a specific period from the refrigerating and air-conditioning devices 2x based on the rated output of the compressor of the refrigerating and air-conditioning device 2x and the check frequency that is set in accordance with the rated output of the compressor. This configuration can easily specify the checked subject device in a specific period when the check frequency is set in accordance with the rated output of the compressor.
(2) The device list generating unit 13 specifies the subject device of the next check based on the elapsed period from when the refrigerating and air-conditioning device 2x was last checked and the check frequency corresponding to the rated output of the compressor. This configuration allows the subject device of the next check to be easily specified.
(3) The specifying condition is a condition for specifying the refrigerating and air-conditioning devices 2x so that the refrigerating and air-conditioning devices 2x comply with the regulation regulating that the check frequency of the refrigerating and air-conditioning device 2x including a compressor of which the rated output is 50 kW or greater be once a year. In this case, the device list generating unit 13 specifies each refrigerating and air-conditioning device 2x including the compressor of which the rated output is 50 kW or greater and of which the first elapsed period is less than one year as the subject device.
   The configuration can easily specify checked subject devices when the specifying condition is the set regulation regulating that the refrigerating and air-conditioning device 2x including the compressor of which the rated output is 50 kW or greater is checked once a year.
(4) The specifying condition is a condition for specifying the refrigerating and air-conditioning devices 2x so that the refrigerating and air-conditioning devices 2x comply with the regulation regulating that the check frequency of each refrigerating and air-conditioning device 2x including a compressor of which the rated output is 50 kW or greater is once every year. In this case, the device list generating unit 13 specifies a refrigerating and air-conditioning device 2x including the compressor of which the rated output is 50 kW or greater and in which the first elapsed period is greater than or equal to one year as a device that missed the preceding check. This configuration can reduce missed checks.
(5) The specifying condition is a condition for specifying the refrigerating and air-conditioning devices 2x so that the refrigerating and air-conditioning devices 2x comply with the regulation regulating that the check frequency of each refrigerating and air-conditioning device 2x having the compressor of which the rated output is included in a range of 7.5 kW or greater and less than 50 kW is once every three years. In this case, the device list generating unit 13 specifies a refrigerating and air-conditioning device 2x having the compressor, of which the rated output is included in the range of 7.5 kW or greater and less than 50 kW, and in which the elapsed period is greater than or equal to one year and less than three years as the subject device.
   The configuration allows checked subject devices to be easily specified when the specifying condition is the set regulation regulating that the refrigerating and air-conditioning device 2x having the compressor of which the rated output is included in the range of 7.5 kW or greater and less than 50 kW be checked once every three years.
(6) The specifying condition is a condition for specifying the refrigerating and air-conditioning devices 2x so that the refrigerating and air-conditioning devices 2x comply with the regulation regulating that the check frequency of each refrigerating and air-conditioning device 2x having the compressor of which the rated output is included in a range of 7.5 kW or greater and less than 50 kW is once every three years. In this case, the device list generating unit 13 specifies a refrigerating and air-conditioning device 2x having the compressor of which the rated output is included in the range of 7.5 kW or greater and less than 50 kW and in which the elapsed period is greater than or equal to three years as a device that missed the preceding check. This configuration can reduce missed checks.

### Modified Examples

In addition to the above-described embodiments, the device management system 1 of the present disclosure is applicable to, for example, modified examples of the above embodiments that are described below and combinations of at least two of the modified examples that do not contradict each other.

In the second embodiment, the check regulation 43 regulates that the second routine check be performed once a year on the refrigerating and air-conditioning device 2x that is the first type specified product and includes a compressor of which the rated output is greater than or equal to 50 kW. In a process for specifying whether the refrigerating and air-conditioning device 2x including the compressor of which the rated output is 50 kW or greater is the subject of the second routine check in the second embodiment, as shown in step S27, the device list generating unit 13 determines whether the second elapsed time is less than one year. In this case, even when only one day has elapsed from the last check, the refrigerating and air-conditioning device 2x will be specified as the checked subject device. Such a determination is preferred when it is recommended that checking be performed a number of times each year. From the viewpoint of efficiency, it is preferred that a certain amount of time elapse from the last check. In this case, step S27 may be changed as described below. In an alternative step S27, the device list generating unit 13 determines whether the second elapsed time calculated in step S22 is greater than or equal to six months and less than one year. When the second elapsed time is greater than or equal to six months and less than one year, the device list generating unit 13 performs step S28. When the second elapsed time is not greater than or equal to six months and less than one year in the alternative step S27, the device list generating unit 13 determines whether the second elapsed time is greater than or equal to one year. When the second elapsed time is greater than or equal to one year, the device list generating unit 13 performs step S29. When the second elapsed time is not greater than or equal to six months and less than one year in the alternative step S27, the device list generating unit 13 determines whether the second elapsed time is greater than or equal to one year. When the second elapsed time is not greater than or equal to one year (that is, second elapsed time is less than six months), the device list generating unit 13 does not specify the refrigerating and air-conditioning device 2x as the checked subject device.

In each embodiment, the device list generating unit 13 may include the following functionalities. The device list generating unit 13 may compare the device information 21, 41 stored in the device information storing unit 11 and the specifying condition stored in the condition information storing unit 12 and notify a terminal, which is connected to the device management system 1, of the subject device specified as the checked subject and the check content of the subject device. This configuration allows the terminal to receive the notification and obtain the check content of the checked subject device without accessing the device management system 1 for the checked subject device.

Specifically, when the facility device 2 is specified as the checked subject device, the device list generating unit 13 notifies a terminal associated with the facility device 2 of information that the facility device 2 has been specified as the checked subject device. A terminal is, for example, the terminal of a manager managing the facility device 2, the terminal of a user using the facility device 2, or the terminal of a commercial establishment conducting maintenance on the facility device 2.

In each embodiment, a process for specifying whether the facility device 2 is the checked subject is not limited to that of the embodiments shown in Fig. 4 or 9. Another example is described as below.

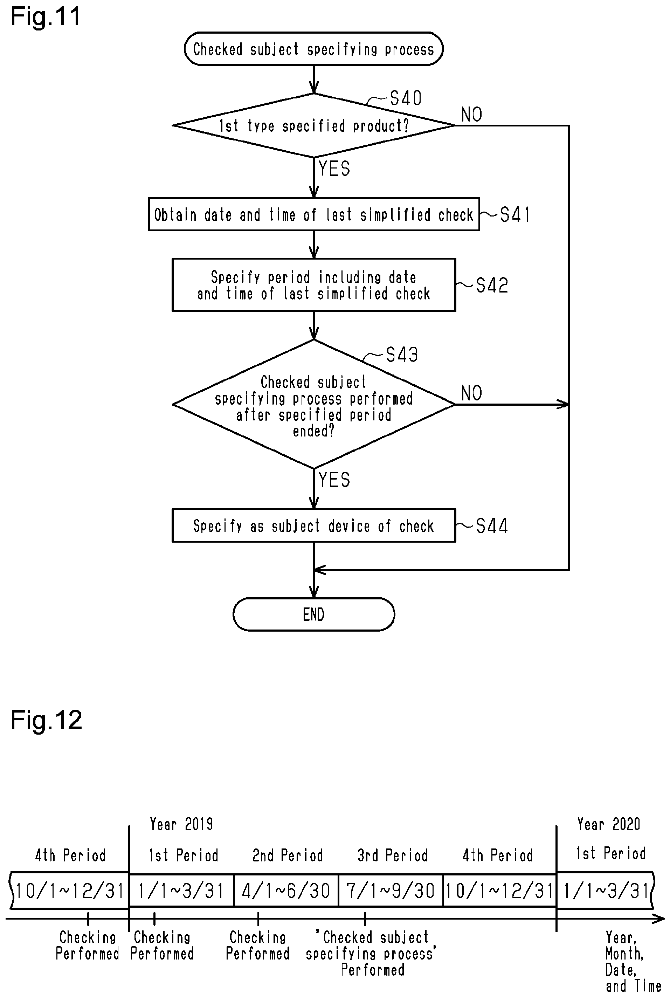

Fig. 11 is a flowchart illustrating another example of the checked subject specifying process for the simplified check. Fig. 12 is a diagram that illustrates the other example of the checked subject specifying process and shows the relationship of when previous checks were performed and when the checked subject specifying process was performed on a time axis.

In the device management system 1 using this process, checking is performed at least once over a period that is set based on the check frequency. For example, when the check regulation regulates that the simplified check be performed once every three months, three months is defined as one period. Subsequently, a year is divided into first to fourth periods. For example, as shown in Fig. 12, the first period is January to March, the second period is April to June, the third period is July to September, and the fourth period is October to December.

The checked subject specifying process in the present modified example will now be described with reference to Fig. 11.

In step S40, the device list generating unit 13 determines whether the product classification of the facility device 2, which is the determination subject, is the first type specified product. When the product classification of the facility device 2 is the first type specified product, the device list generating unit 13 performs step S41. When the product classification of the facility device 2 is not the first type specified product, the device list generating unit 13 determine that the facility device 2 is not a checked subject device.

In step S41, the device list generating unit 13 obtains the date and time of the last simplified check of the facility device 2 from the device information 21 of the facility device 2.

In step S42, the device list generating unit 13 specifies a period including the date and time of the last simplified check.

In step S43, the device list generating unit 13 determines whether the checked subject specifying process was performed after the period specified in step S42 ended. If the checked subject specifying process was performed after the period specified in step S42 ended, the device list generating unit 13 performs step S44. If the checked subject specifying process was performed when or before the period specified in step S42 ended, the device list generating unit 13 does not specify the facility device 2 as the checked subject device.

In step S44, the device list generating unit 13 specifies the facility device 2 as the checked subject device. With this configuration, the check can be performed once in each period.

The second embodiment specifies air conditioners as examples of refrigerating and air-conditioning devices. Similarly, freezers or refrigerators may be examples of refrigerating and air-conditioning devices. When checking a freezer or a refrigerator, the check regulation 43 is also set in accordance with the type of each check performed. The check regulation 43 for the simplified check is the same as the second embodiment.

In an example, the check regulation of the first routine check on a freezer or a refrigerator regulates that the check be performed at least once a year on the refrigerating and air-conditioning device 2x that is the first type specified product and includes the compressor of which the rated output is greater than or equal to 7.5 kW.

In this case, the specifying condition of a freezer or a refrigerator is defined as a condition for specifying the refrigerating and air-conditioning device 2x so that the refrigerating and air-conditioning device 2x complies with the check regulation regulating that the check frequency be once a year for the refrigerating and air-conditioning device 2x that is classified as a freezer or a refrigerator and includes a compressor of which the rated output is greater than or equal to 7.5 kW.

Specifically, the device list generating unit 13 specifies the following refrigerating and air-conditioning device 2x as a determination subject. The device list generating unit 13 specifies a refrigerating and air-conditioning device 2x including the compressor of which the rated output is greater than or equal to 7.5 kW as the subject device if the determination subject is the refrigerating and air-conditioning device 2x classified as a freezer or a refrigerator, the compressor of the determination subject has the rated output of 7.5 kW or greater, and the elapsed period from the last check performed on the determination subject is less than one year.

When the determination subject is the refrigerating and air-conditioning device 2x classified as a freezer or a refrigerator, the compressor of the determination subject has the rated output of 7.5 kW or greater, and the elapsed period from the last check of the determination subject is greater than or equal to one year, the device list generating unit 13 determines that the preceding check was missed for the refrigerating and air-conditioning device 2x including the compressor of which the rated output is greater than or equal to 7.5 kW.

The configuration can easily specify the checked subject device when the specifying condition is the set regulation regulating that the refrigerating and air-conditioning device including the compressor of which the rated output is 7.5 kW or greater be checked once a year. Further, this specifies devices that missed the preceding check and reduces missed checks.

In the second embodiment, the device management system 1 manages air conditioners among devices that belong to the refrigerating and air-conditioning device 2x. Alternatively, an air conditioner, a freezer, and a refrigerator can all be managed together. The refrigerating and air-conditioning devices 2x belonging to the first type specified product may be classified into a division including an air conditioner and a division including a freezer and a refrigerator. In this case, it is preferred that the device information 21 include information related to the divisions of the refrigerating and air-conditioning device 2x in addition the information related to the product classifications of the facility device 2.

It should be understood that the present device may be embodied in many other specific forms within the scope and equivalence of the present device described in the appended claims.

## Claims

1. A device management system, comprising:
a device information storing unit (11) that stores device information (21, 41) related to facility devices (2), the facility devices (2) being refrigerating and air-conditioning devices (2x);
a condition information storing unit (12) that stores a specifying condition for specifying a checked subject from the facility devices (2), the check contents being refrigerant leakage and events that may cause refrigerant leakage; and
a device list generating unit (13) that generates a device list (24, 44) of a subject device that is the checked subject, wherein
the device information storing unit (11) is separate from the condition information storing unit (12),
the device information (21, 41) includes information related to a product classification of each of the facility devices (2) and information related to a rated output of a compressor installed in each of the facility devices (2),
the specifying condition includes: the product classification as information for specifying the facility devices (2); a check frequency that is set in accordance with the product classification as information for specifying a check period of each of the facility devices; the rated output of the compressor as information for specifying the facility devices (2); and a check frequency that is set in accordance with the rated output of the compressor as information for specifying a check period of each of the facility devices (2),
the specifying condition is not associated with each facility device (2), and
the device list generating unit (13) is configured to
compare the device information stored in the device information storing unit (11) and the specifying condition stored in the condition information storing unit (12) to specify a subject device that is the checked subject in a specific period, which is determined by a user, from the facility devices (2) in accordance with:
a determination based on the product classification of the device information and the check frequency set in accordance with the product classification in the specifying condition; and
a determination based on the rated output of the compressor of each of the facility devices and the check frequency set in accordance with the rated output of the compressor.

2. The device management system according to claim 1, wherein the device list generating unit (13) updates the specifying condition based on change information related to the specifying condition that is obtained via an interface (30).

3. The device management system according to claim 1, wherein the device list generating unit (13) specifies the subject device that is a next checked subject based on an elapsed period from when each of the facility devices (2) was last checked and the check frequency corresponding to the product classification.

4. The device management system according to claim 1, wherein
the device list generating unit (13) specifies the subject device that is a next checked subject based on an elapsed period from when the refrigerating and air-conditioning device (2x) was last checked and the check frequency corresponding to the rated output of the compressor.

5. The device management system according to any one of claims 1 to 4, wherein the device list generating unit (13) compares the device information (21, 41) stored in the device information storing unit (11) and the specifying condition stored in the condition information storing unit (12) to issue a notification of the subject device specified as the checked subject and a check content of the subject device.

## Patentansprüche

1. Vorrichtungsverwaltungssystem, umfassend:
eine Vorrichtungsinformationsspeichereinheit (11), die Vorrichtungsinformationen (21, 41) in Bezug auf Gebäudevorrichtungen (2) speichert, wobei die Gebäudevorrichtungen (2) Kälte- und Klimatisierungsvorrichtungen (2x) sind;
eine Zustandsinformationsspeichereinheit (12), die einen spezifizierenden Zustand zum Spezifizieren eines geprüften Subjekts unter den Gebäudevorrichtungen (2) speichert, wobei der Prüfungsinhalt Kältemittelleckagen und Ereignisse sind, die Kältemittelleckagen bewirken können; und
eine Vorrichtungslistenerzeugungseinheit (13), die eine Vorrichtungsliste (24, 44) einer Subjektvorrichtung erzeugt, wobei die Subjektvorrichtung das geprüfte Subjekt ist, wobei
die Vorrichtungsinformationsspeichereinheit (11) von der Zustandsinformationsspeichereinheit (12) getrennt ist,
die Vorrichtungsinformationen (21, 41) Informationen in Bezug auf eine Produktklassifizierung von jeder der Gebäudevorrichtungen (2) und Informationen in Bezug auf eine Nennleistung eines Kompressors, der in jeder der Gebäudevorrichtungen (2) installiert ist, einschließen,
der spezifizierende Zustand Folgendes einschließt: die Produktklassifizierung als Informationen zum Spezifizieren der Gebäudevorrichtungen (2); eine Prüfungshäufigkeit, die gemäß der Produktklassifizierung als Informationen zum Spezifizieren eines Prüfzeitraumes für jede der Gebäudevorrichtungen festgesetzt ist; die Nennleistung des Kompressors als Informationen zum Spezifizieren der Gebäudevorrichtungen (2); und eine Prüfungshäufigkeit, die gemäß der Nennleistung des Kompressors als Informationen zum Spezifizieren eines Prüfzeitraums für jede der Gebäudevorrichtungen (2) festgesetzt ist,
wobei der spezifizierende Zustand nicht jeder Gebäudevorrichtung (2) zugeordnet ist, und
wobei die Vorrichtungslistenerzeugungseinheit (13) so konfiguriert ist, dass
sie die in der Vorrichtungsinformationsspeichereinheit (11) gespeicherten Vorrichtungsinformationen und den in der Zustandsinformationsspeichereinheit (12) gespeicherten spezifizierenden Zustand vergleicht, um eine Subjektvorrichtung zu spezifizieren, die in einem spezifischen Zeitraum das geprüfte Subjekt ist, das durch einen Benutzer unter den Gebäudevorrichtungen (2) gemäß Folgendem bestimmt wird:
einer Bestimmung basierend auf der Produktklassifizierung der Vorrichtungsinformationen und der gemäß der Produktklassifizierung im spezifizierenden Zustand festgesetzten Prüfungshäufigkeit; und
einer Bestimmung basierend auf der Nennleistung des Kompressors von jeder der Gebäudevorrichtungen und der Prüfungshäufigkeit, die gemäß der Nennleistung des Kompressors festgesetzt ist.

2. Vorrichtungsverwaltungssystem nach Anspruch 1, wobei die Vorrichtungslistenerzeugungseinheit (13) den spezifizierenden Zustand basierend auf Änderungsinformationen in Bezug auf den spezifizierenden Zustand, der über eine Schnittstelle (30) erhalten wird, aktualisiert.

3. Vorrichtungsverwaltungssystem nach Anspruch 1, wobei die Vorrichtungslistenerzeugungseinheit (13) die Subjektvorrichtung spezifiziert, die ein nächstes geprüftes Subjekt ist, basierend auf einer verstrichenen Zeitdauer seit der letzten Prüfung von jeder der Gebäudevorrichtungen (2) und der Prüfungshäufigkeit, die der Produktklassifizierung entspricht.

4. Vorrichtungsverwaltungssystem nach Anspruch 1, wobei
die Vorrichtungslistenerzeugungseinheit (13) die Subjektvorrichtung spezifiziert, die ein nächstes geprüftes Subjekt ist, basierend auf einer verstrichenen Zeitdauer seit der letzten Prüfung der Kälte- und Klimatisierungsvorrichtung (2x) und der Prüfungshäufigkeit, die der Nennleistung des Kompressors entspricht.

5. Vorrichtungsverwaltungssystem nach einem der Ansprüche 1 bis 4, wobei die Vorrichtungslistenerzeugungseinheit (13) die in der Vorrichtungsinformationsspeichereinheit (11) gespeicherten Vorrichtungsinformationen (21, 41) und den in der Zustandsinformationsspeichereinheit (12) gespeicherten spezifizierenden Zustand vergleicht, um eine Mitteilung der spezifizierten Subjektvorrichtung als das geprüfte Subjekt und eines Prüfungsinhalts der Subjektvorrichtung auszugeben.

## Revendications

1. Système de gestion de dispositif, comprenant :
une unité de stockage (11) d'informations de dispositif, qui stocke des informations de dispositif (21, 41) liées à des dispositifs de l'installation (2), les dispositifs de l'installation (2) étant des dispositifs de réfrigération et de conditionnement d'air (2x) ;
une unité de stockage (12) d'informations de condition qui stocke une condition spécifique pour spécifier un sujet contrôlé depuis les dispositifs de l'installation (2), les contenus de contrôle étant les fuites de réfrigérant et les événements pouvant provoquer des fuites de réfrigérant ; et
une unité de génération (13) de liste de dispositifs qui génère une liste de dispositifs (24, 44) d'un dispositif objet qui est l'objet contrôlé, dans lequel
l'unité de stockage (11) d'informations de dispositif est séparée de l'unité de stockage (12) d'informations de condition,
les informations de dispositif (21, 41) incluent des informations liées à une classification de produit de chacun des dispositifs de l'installation (2) et des informations liées à la puissance nominale d'un compresseur installé dans chacun des dispositifs de l'installation (2),
la condition de spécification inclut : la classification de produit comme information pour spécifier les dispositifs de l'installation (2) ; une fréquence de contrôle qui est définie en accord avec la classification de produit comme information pour spécifier une période de contrôle de chacun des dispositifs de l'installation ; la puissance nominale du compresseur comme information pour spécifier les dispositifs de l'installation (2) ; et une fréquence de contrôle qui est définie en accord avec la puissance nominale du compresseur comme information pour spécifier une période de contrôle de chacun des dispositifs de l'installation (2),
la condition de spécification n'est pas associée à chaque dispositif de l'installation (2), et
l'unité de génération (13) de liste de dispositifs est configurée pour
comparer les informations de dispositif stockées dans l'unité de stockage (11) d'informations de dispositif et la condition de spécification stockée dans l'unité de stockage (12) d'informations de condition pour spécifier un dispositif objet qui est l'objet contrôlé dans une période spécifique, qui est déterminée par un utilisateur, à partir des dispositifs de l'installation (2) en accord avec :
une détermination basée sur la classification de produit des informations de dispositif et la fréquence de contrôle définie en accord avec la classification de produit dans la condition de spécification ; et
une détermination basée sur la puissance nominale du compresseur de chacun des dispositifs de l'installation et la fréquence de contrôle définie en accord avec la puissance nominale du compresseur.

2. Système de gestion de dispositif selon la revendication 1, dans lequel l'unité de génération (13) de liste de dispositifs actualise la condition de spécification sur la base d'informations de changement liées à la condition de spécification qui est obtenue via une interface (30).

3. Système de gestion de dispositif selon la revendication 1, dans lequel l'unité de génération (13) de liste de dispositifs spécifie le dispositif objet qui est l'objet contrôlé suivant sur la base d'une période écoulée à partir du moment où chacun des dispositifs de l'installation (2) a été contrôlé pour la dernière fois et de la fréquence de contrôle correspondant à la classification de produit.

4. Système de gestion de dispositif selon la revendication 1, dans lequel
l'unité de génération (13) de liste de dispositifs spécifie le dispositif objet qui est l'objet contrôlé suivant sur la base d'une période écoulée à partir du moment où le dispositif de réfrigération et de conditionnement d'air (2x) a été contrôlé pour la dernière fois et de la fréquence de contrôle correspondant à la puissance nominale du compresseur.

5. Système de gestion de dispositif selon l'une quelconque des revendications 1 à 4,
dans lequel l'unité de génération (13) de liste de dispositifs compare les informations de dispositif (21, 41) stockées dans l'unité de stockage (11) d'informations de dispositif et la condition de spécification stockée dans l'unité de stockage (12) d'informations de condition pour émettre une notification du dispositif objet spécifié comme étant l'objet contrôlé et un contenu de contrôle du dispositif objet.
